# EUROPÄISCHE PATENTSCHRIFT

(11) **EP 1 904 742 B1**
(45) Veröffentlichungstag und Bekanntmachung des Hinweises auf die Patenterteilung: **05.10.2016**
(21) Anmeldenummer: 06762511.1
(22) Anmeldetag: 10.07.2006
(51) Int. Cl.: F03B 13/10, F03B 13/08

(54) **TURBINE FÜR EINE WASSERKRAFTANLAGE**
TURBINE FOR A HYDROELECTRIC POWER STATION
TURBINE POUR UNE CENTRALE HYDROELECTRIQUE

(30) Priorität: 08.07.2005 DE 102005032381
(43) Veröffentlichungstag der Anmeldung: 02.04.2008
(73) Patentinhaber: Wobben Properties GmbH, 26607 Aurich (DE)
(72) Erfinder: ROHDEN, Rolf, 26607 Aurich (DE); HOLTKAMP, Dirk, 26605 Aurich (DE)
(74) Vertreter: Eisenführ Speiser
(86) Internationale Anmeldenummer: PCT/EP2006/006719
(87) Internationale Veröffentlichungsnummer: WO 2007/006524

(56) Entgegenhaltungen:
- WO-A-03/056169
- AT-U1- 2 546
- DE-C- 884 930
- FR-A- 1 137 394
- US-A- 3 353 028

## Beschreibung

Die vorliegende Erfindung betrifft eine Turbine für eine Wasserkraftanlage zum Erzeugen elektrischer Energie sowie eine Wasserkraftanlage mit einer entsprechenden Turbine.

Es sind Wasserkraftwerke bzw. Wasserkraftanlagen mit Turbinen bekannt, welche im Wesentlichen in drei Ebenen aufgeteilt sind. Die erste Ebene stellt in der Regel ein Stützapparat dar, mit dem die Turbine in ihrer Position in einem Kanal gehalten wird. Ferner ist ein Leitapparat vorgesehen, welcher üblicherweise vor dem Laufrad angeordnet ist. Schließlich ist das Laufrad selbst mit den Schaufeln dahinter angeordnet. Somit wird eine Strömung einer derartigen Turbine an diesen drei Ebenen bzw. Stellen beeinflusst.

In "Wasserkraftanlagen", 3. Auflage, Springer Verlag 2003 von Jürgen Giesecke und Emil Mosonyi sind mehrere Wasserkraftanlagen gezeigt. Hier ist beispielsweise eine Kaplan-Rohrturbine gezeigt. Diese Turbine weist einen Einlaufschacht, die Turbine und einen Saugschlauch auf, welche sich weitestgehend in einer Linie befinden und horizontal oder leicht gegen die Horizontale geneigt sind. Dies hat den Vorteil, dass eine mehrfache Änderung der Strömungsrichtung zugunsten einer höheren Energieausbeute vermieden wird. Die Turbine weist Stützschaufeln, Leitschaufeln sowie ein dahinter angeordnetes Laufrad mit entsprechenden Schaufeln auf.

Ferner sind Straight-Flow-Turbineneinheiten bekannt, wobei ein Generator konzentrisch außerhalb des Strömungsrohres angeordnet ist, so dass sich der Generator nicht im Inneren der Gehäusebirne befindet. Das Laufrad besteht aus einer Nabe, Laufradschaufeln sowie einem Laufradkranz, welche typischerweise als Schweißkonstruktion zu einer Einheit gefertigt werden. Ein Tragkreuz ist in Strömungsrichtung vor den Leitschaufeln sowie dem Laufrad mit den Laufradschaufeln angeordnet.

Der vor dem Laufrad angeordnete Leitapparat wird durch Verdrehen der Leitschaufeln bzw. von Stützschaufeln dazu verwendet, die Turbine abzuschalten, indem die Schaufeln so eingestellt werden, dass sie aneinander anliegen und somit den Kanal verschließen.

Als Stand der Technik wird an dieser Steile noch allgemein auf folgende Druckschriften hingewiesen: DE 34 29 288 A1, DE 884 930 C, EP 0 622 543 A1, CH 332 959, US 2005/0001432 A1 und WO 03/056169 A1.

Es ist somit Aufgabe der vorliegenden Erfindung, eine Turbine sowie eine Wasserkraftanlage mit einer entsprechenden Turbine vorzusehen, welche einen vereinfachten Aufbau sowie eine größere Leistung aufweist.

Diese Aufgabe wird durch eine Turbine nach Anspruch 1 sowie durch ein Wasserkraftwerk nach Anspruch 6 gelöst.

Somit wird eine Turbine für eine Wasserkraftanlage vorgesehen. Die Turbine weist ein Laufrad mit einer Mehrzahl von Schaufeln auf, wobei das Laufrad vor einem Leitapparat (in Strömungsrichtung) angeordnet ist. Der Pitchwinkel der Schaufeln des Laufrades ist verstellbar ausgestaltet.

Dadurch, dass das Laufrad vor dem Leitapparat (in Strömungsrichtung) angeordnet ist, trifft die Strömung zuerst auf das Laufrad und erst danach auf den Leitapparat, so dass sich für das Laufrad optimale Strömungsverhältnisse ergeben.

Dadurch, dass kein separater Stützapparat vorgesehen ist, entfallen die Verluste einer Umströmung des Stützapparates vollständig, wodurch sich ein erhöhter Wirkungsgrad im Vergleich zum Stand der Technik ergibt.

Gemäß einem Aspekt der vorliegenden Erfindung weist das Laufrad eine kugelförmige Nabe zum Verbinden der Turbinenschaufeln mit dem Laufrad auf. Die kugelförmige Ausgestaltung der Nabe ermöglicht es, den Pitchwinkel der Turbinenschaufeln in großem Umfang zu verstellen.

Gemäß einem weiteren Aspekt der vorliegenden Erfindung liegen die Turbinschaufeln formschlüssig an der kugelförmigen Nabe an, so dass ungünstige Strömungsverhältnisse vermieden werden können, da die Turbinenschaufeln sich an die Nabe anschließen.

Gemäß einem weiteren Aspekt der vorliegenden Erfindung lässt sich der Pitchwinkel der Turbinenschaufeln in einem Winkel von -20° bis 140° verstellen, so dass das Laufrad abgebremst bzw. beschleunigt werden kann, wenn der Pitchwinkel der Turbinenschaufeln entsprechend ausgewählt wird.

Weitere Aspekte der vorliegenden Erfindung sind Gegenstand der Unteransprüche.

Die Erfindung wird nachfolgend unter Bezugnahme auf die Zeichnungen näher erläutert.
- Fig. 1a: zeigt eine schematische Darstellung einer Turbine gemäß dem ersten Ausführungsbeispiel,
- Fig. 1b: zeigt eine weitere schematische Darstellung einer Turbine gemäß dem ersten Ausführungsbeispiel,
- Fig. 1c: zeigt eine frontale Ansicht einer Turbine gemäß dem ersten Ausführungsbeispiel,
- Fig. 2a: zeigt eine schematische Darstellung einer Turbine gemäß dem zweiten Ausführungsbeispiel,
- Fig. 2b: zeigt eine weitere schematische Darstellung einer Turbine gemäß dem zweiten Ausführungsbeispiel,
- Fig. 2c: zeigt eine frontale Ansicht einer Turbine gemäß dem zweiten Ausführungsbeispiel,
- Fig. 3a: zeigt eine schematische Darstellung einer Turbine gemäß dem dritten Ausführungsbeispiel,
- Fig. 3b: zeigt eine weitere schematische Darstellung einer Turbine gemäß dem dritten Ausführungsbeispiel, und
- Fig. 3c: zeigt eine frontale Ansicht einer Turbine gemäß dem dritten Ausführungsbeispiel.

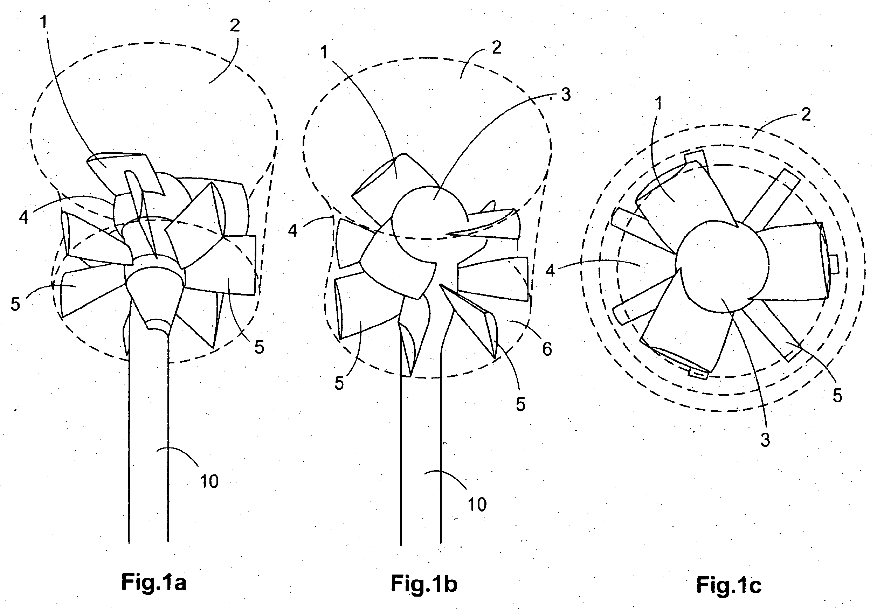

Fig. 1 a zeigt eine schematische Darstellung einer Turbine gemäß einem ersten Ausführungsbeispiel. Fig. 1b zeigt eine weitere Darstellung der Turbine gemäß Fig. 1a. In Fig. 1c ist eine Frontansicht der Turbine gemäß Fig. 1a und 1b gezeigt. Die Turbine weist ein Laufrad 4 mit Turbinenschaufeln 1 auf, welche mit einer im Wesentlichen kugelförmig ausgestalteten Nabe 3 verbunden sind. Das Laufrad 4 mit den Turbinenschaufeln 1 befindet sich in Strömungsrichtung vor einem Leitapparat 6. Somit handelt es sich bei der vorliegenden Turbine um einen Luvläufer. Mit anderen Worten, der Leitapparat 6 befindet sich hinter dem Laufrad 4 und stützt gleichzeitig das Laufrad im Kanal ab, so dass ein zusätzlicher Stützapparat entfallen kann. Der Leitapparat 6 weist somit ebenfalls eine Lagerung auf.

Somit trifft die Strömung zunächst ungestört auf das Laufrad 4, so dass der Strömung eine maximale Energie entzogen werden kann, bevor die Strömung auf den Leitapparat 6 trifft. Der Leitapparat 6 ist dabei derart ausgestaltet, dass ein optimales Abströmen des Wassers gewährleistet ist, indem Drallverluste verringert werden, so dass ein Aufstauen und ein damit einhergehender Zusammenbruch des Wirkungsgrades verhindert wird.

Der Leitapparat weist Stützschaufeln 5 auf. In dem ersten Ausführungsbeispiel sind sieben Stützschaufeln 5 vorgesehen. Die Stützschaufeln 5 sind vorzugsweise nicht verstellbar ausgestaltet.

Die Schaufeln 1 des Laufrades 4 sind in einem Bereich von -20° bis 140°, bevorzugt -10° bis 120° verstellbar, so dass eine Pitchverstellung der Turbinenschaufeln 1 möglich ist. Somit können die Schaufeln des Laufrades in eine beliebige Position verstellt werden, ohne dass sich ein Spalt zwischen den Turbinenschaufeln 1 und der Nabe bildet, da die Turbinenschaufeln 1 durch die Kugelform der Nabe formschlüssig an der Nabe anliegen.

Durch Verstellen der Schaufeln 1 um 90° werden die Schaufeln in eine sogenannte "Fahnenposition" gedreht, d. h. das Wasser fließt an den Schaufeln vorbei und durch den Leitapparat 6 durch, ohne dass das Laufrad 4 in Bewegung gesetzt wird. Dadurch kann auch dann Wasser durch den Turbinenkanal abfließen, wenn die Turbine nicht in Betrieb ist, und der Kanal muss nicht abgesperrt werden, um das Laufrad abzubremsen und ggf. anzuhalten.

Durch das Verstellen der Schaufeln des Laufrades 4 und dadurch, dass das Laufrad 4 gestoppt werden kann, indem die Schaufeln in eine Fahnenposition gedreht werden können, ist eine Verstellbarkeit der Stützschaufeln nicht erforderlich.

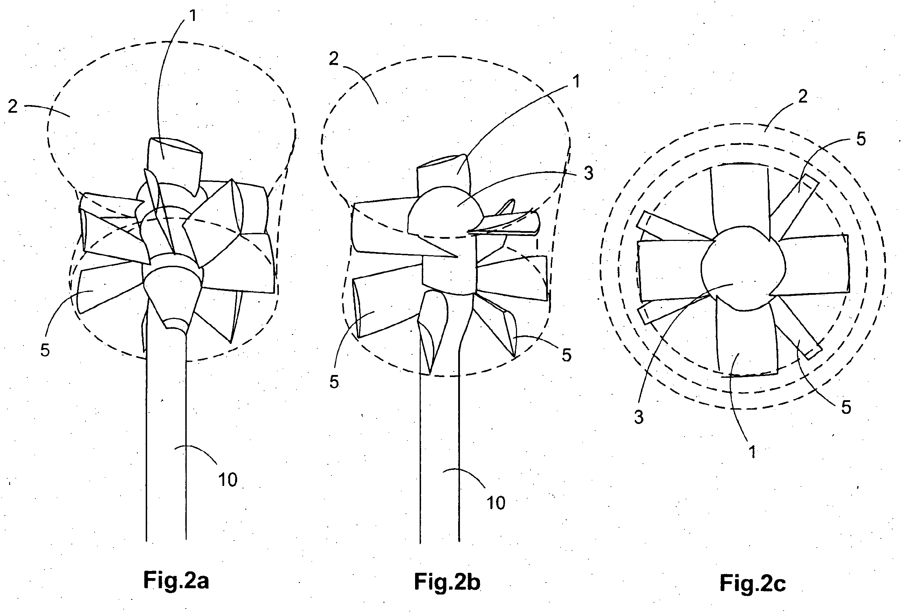

In den Figuren 2a bis 2c ist eine Turbine gemäß dem zweiten Ausführungsbeispiel gezeigt. Hierbei entspricht der Aufbau der Turbine gemäß dem zweiten Ausführungsbeispiel im Wesentlichen dem Aufbau der Turbine gemäß dem ersten Ausführungsbeispiel. Wie im ersten Ausführungsbeispiel sind sieben Stützschaufeln 5 im Leitapparat vorgesehen. Abweichend von dem ersten Ausführungsbeispiel sind jedoch vier Schaufeln an dem Laufrad vorgesehen.

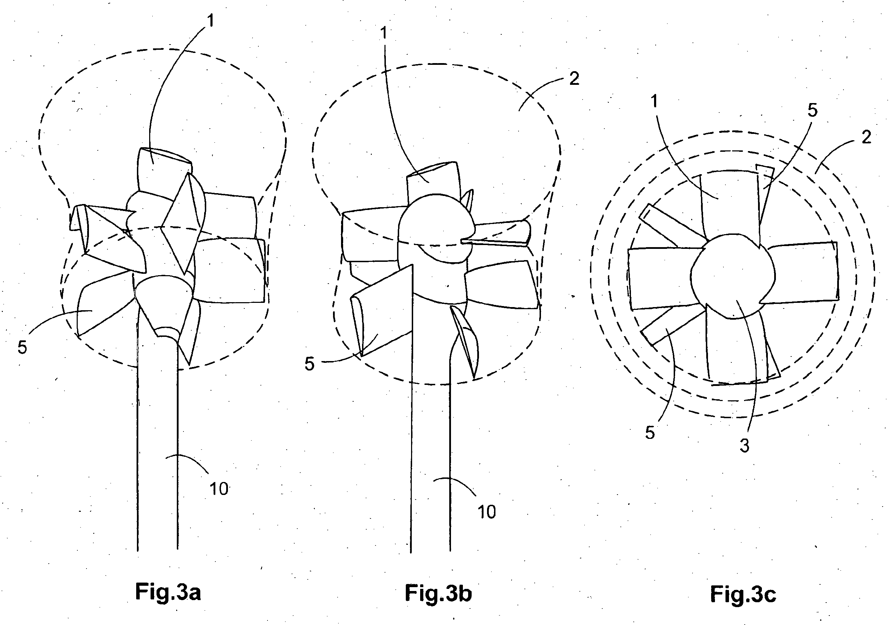

Die Figuren 3a bis 3c zeigen jeweils eine Turbine gemäß dem dritten Ausführungsbeispiel. Der Aufbau der Turbine gemäß dem dritten Ausführungsbeispiel entspricht im Wesentlichen dem Aufbau der Turbine gemäß dem ersten und zweiten Ausführungsbeispiel. Im Gegensatz zu den Turbinen gemäß dem ersten und zweiten Ausführungsbeispiel sind fünf Stützschaufeln 5 in dem Leitapparat vorgesehen.

In den drei oben gezeigten Ausführungsformen sind die Schaufeln 1 des Laufrades 3 verstellbar ausgestaltet, so dass die Turbine durch Verstellen der Schaufeln abgestellt werden kann. Somit ist eine Verstellbarkeit der Schaufeln des Leitapparates zum Unterbrechen der Strömung im Kanal nicht notwendig.

In den drei oben gezeigten Ausführungsbeispielen ist das Laufrad mit einer Welle 10 verbunden, welche wiederum an einen elektrischen Generator gekoppelt werden kann, um die Rotationsbewegung der Welle 10 in elektrische Energie umzuwandeln.

Die erfindungsgemäße Turbine ist somit ein Luvläufer, d h. der Leitapparat befindet sich hinter dem Laufrad 4. Der Leitapparat ist sowohl Stütze als auch Lager für die Turbine. Die Schaufeln 1 des Laufrades 4 sind in einem Winkel von -20° bis 140° verstellbar ausgestaltet. Die Nabe 3 des Laufrades 4 ist im Wesentlichen kugelförmig ausgestaltet, damit die Schaufeln 1 des Laufrades 3 in jeden beliebigen Winkel eingestellt werden können, ohne dass ein Spalt vorhanden ist. Die Strömung trifft somit zuerst auf das Laufrad 4 auf, bevor es in den Leitapparat 6 weitergeleitet wird, so dass sich optimale Strömungsverhältnisse für das Laufrad 4 ausbilden. Die erfindungsgemäße Turbine weist somit lediglich zwei Ebenen auf, d. h. das Laufrad sowie den Leitapparat.

Die oben beschriebene Turbine für eine Wasserkraftanlage ist vorzugsweise getriebelos (über die Welle 10) mit einem Generator zum Erzeugen von elektrischem Strom gekoppelt, d. h. es wird ein getriebeloses System aus Turbine und Generator vorgesehen.

Der mit der Turbine gekoppelte Generator ist vorzugsweise drehzahlvariabel ausgestaltet ist. Dazu weist das System bzw. die Wasserkraftanlage vorzugsweise neben dem Generator einen Gleichrichter sowie einen Umrichter auf, welcher dann wiederum an ein Netz angeschlossen werden kann. Durch das Vorsehen des Gleichrichters und des Umrichters kann der Generator auch bei unterschiedlichen Drehzahlen betrieben werden, da mittels des Gleichrichters und des Umrichters die durch den Generator erzeugte Spannung bzw. Leistung auf die benötigte Netzfrequenz umgewandelt werden kann.

Durch die drehzahlvariable Ausgestaltung des Generators kann eine höhere Ausbeute ermöglicht werden, da auch dann von dem elektrischen Generator erzeugte Leistung an das Netz abgegeben werden kann, wenn die Drehzahl des Generators nicht ausreichen würde, um die von dem Netz benötigte Frequenz zu liefern.

Wenn die erfindungsgemäße Turbine mit einem elektrischen Generator gekoppelt ist und in einem Wasserkraftwerk eingesetzt wird, dann kann es zu unterschiedlichen Differenzen zwischen dem Oberwasser (dem aufgestauten Teil des Wassers) und dem Unterwasser (einem durch einen Tidehub ausgesetzten Teil unterhalb einer Staustufe) kommen. Die durch das Wasserkraftwerk erzeugte Leistung ist jedoch direkt von der Höhendifferenz zwischen Ober- und Unterwasser abhängig. Wenn nun eine Turbine mit drehzahlstarrem Generator verwendet wird, so kann dieser Generator nur dann eingesetzt werden, wenn die Fallhöhe des Wassers (Höhendifferenz zwischen Ober- und Unterwasser) eine benötigte Drehzahl des Generators zulässt.

Der erfindungsgemäße drehzahlvariable elektrische Generator mit einem nachfolgenden Umrichter kann auch bei einer Drehzahl unterhalb der erforderlichen Drehzahl betrieben werden, d. h. auch bei unterschiedlichen Leistungen. Somit kann die erfindungsgemäße Turbine auch dann arbeiten, wenn die Drehzahl der Turbine unter eine ansonsten erforderliche Drehzahl fällt.

## Patentansprüche

1. Turbine für eine Wasserkraftanlage zum Erzeugen elektrischer Energie, mit einem Laufrad (4) mit einer Mehrzahl von Turbinenschaufeln (1),
einem Leitapparat (6) mit einer Vielzahl von Stützschaufeln (5), welche in Durchströmungsrichtung hinter dem Laufrad (4) angeordnet sind und als Stützapparat der Turbine dienen, dadurch gekennzeichent dass
der Pitchwinkel der Turbinenschaufeln (1) des Laufrades (4) verstellbar ausgestaltet ist,
wobei die Turbine als Luvläufer ausgestaltet ist, damit die Turbinenschaufeln (1) in Durchströmungsrichtung von einer im Wesentlichen von der Turbine ungestörten Strömung angeströmt werden,
wobei das Laufrad (4) eine kugelförmige Nabe (3) zum Verbinden der Schaufeln (1) mit dem Laufrad (4) aufweist,
wobei die Schaufeln (1) formschlüssig mit der Nabe (3) verbunden sind,
wobei der Pitchwinkel der Turbinenschaufeln (1) von -20° bis 140° verstellbar ausgestaltet sind und die Turbinenschaufeln (1) in diesem Winkelbereich verstellbar ausgestaltet sind, ohne dass sich ein Spalt zwischen den Turbinenschaufeln (1) und der Nabe (3) bildet.

2. Wasserkraftanlage mit mindestens einer Turbine nach Anspruch 1.

3. Wasserkraftanlage nach Anspruch 2, wobei
die Turbine in einem Kanal angeordnet ist und der Leitapparat (6) dazu ausgestaltet ist, das Laufrad (4) im Kanal abzustützen.

4. Wasserkraftanlage nach Anspruch 3, ferner mit einem elektrischen Generator zum Erzeugen elektrischer Energie, wobei der elektrische Generator getriebelos mit der Turbine gekoppelt ist.

5. Wasserkraftanlage nach Anspruch 3, wobei der Generator drehzahlvariabel ausgestaltet ist.

6. Wasserkraftanlage nach Anspruch 4 oder 5, ferner mit einem Gleichrichter zum Gleichrichten der elektrischen Ausgangsspannung des Generators und einem Umrichter, welcher zum einen mit dem Gleichrichter und zum anderen mit einer Netzanbindung gekoppelt ist, wobei der Umrichter dazu dient, elektrische Leistung bei einer von dem Netz benötigten Frequenz an das Netz abzugeben.

## Claims

1. A turbine for a hydroelectric power installation for generating electrical energy comprising
a rotor (4) and a plurality of turbine blades (1),
a guide apparatus (6) having a plurality of support blades (5) which are arranged after the rotor (4) in the through-flow direction and which serve as a support apparatus of the turbine,
**characterised in that** the pitch angle of the turbine blades (1) of the rotor (4) is adapted to be variable, and
wherein the turbine is in the form of an upstream rotor turbine so that the turbine blades (1) have an afflux flow which is substantially undisturbed by the turbine in the through-flow direction,
wherein the rotor (4) has a spherical hub (3) for connecting the blades (1) to the rotor (4),
wherein the blades (1) are connected in positively locking relationship to the hub (3),
wherein the pitch angle of the turbine blades (1) is adapted to be adjustable from-20° to 140°, and the turbine blades (1) can be displaced in this angle range without a gap being formed between the turbine blades (1) and the hub (3).

2. A hydroelectric power installation having at least one turbine according to claim

3. A turbine according to claim 2 , wherein the turbine is arranged in a passage and the guide apparatus (6) is adapted to support the rotor (4) in the passage.

4. A hydroelectric power installation according to claim 3 further comprising an electrical generator for generating electrical energy, wherein the electrical generator is gear-lessly coupled to the turbine.

5. A hydroelectric power installation according to claim 6 wherein the generator is adapted to be variable in rotary speed.

6. A hydroelectric power installation according to claim 4 or claim 5 further comprising a rectifier for rectifying the electrical output voltage of the generator and an inverter which is coupled on the one hand to the rectifier and on the other hand to a network

## Revendications

1. Turbine pour une centrale turboélectrique pour la génération d'énergie électrique avec
une roue (4) avec une pluralité d'aubes de turbine (1),
un appareil de guidage (6) avec une pluralité d'aubes d'appui (5) qui sont agencées dans le sens de passage derrière la roue (4) et servent d'appareil d'appui de la turbine, **caractérisée en ce que**
l'angle de pas des aubes de turbine (1) de la roue (4) est configuré de manière réglable,
dans laquelle la turbine est configurée comme un rotor au vent afin que les aubes de turbine (1) soient balayées dans le sens de passage par un courant non dérangé sensiblement par la turbine,
dans laquelle la roue (4) présente un moyeu sphérique (3) pour la liaison des aubes (1) avec la roue (4),
dans laquelle les aubes (1) sont reliées par complémentarité de formes au moyeu (3),
dans laquelle l'angle de pas des aubes de turbine (1) est configuré de manière réglable de -20° à 140° et les aubes de turbine (1) sont configurées de manière réglable dans cette plage angulaire sans qu'une fente entre les aubes de turbine (1) et le moyeu (3) ne se forme.

2. Centrale turboélectrique avec au moins une turbine selon la revendication 1.

3. Centrale turboélectrique selon la revendication 2, dans laquelle
la turbine est agencée dans un canal et l'appareil de guidage (6) est configuré afin d'appuyer la roue (4) dans le canal.

4. Centrale turboélectrique selon la revendication 3, en outre avec un générateur électrique pour la génération d'énergie électrique, dans laquelle le générateur électrique est couplé sans engrenage à la turbine.

5. Centrale turboélectrique selon la revendication 3, dans laquelle le générateur est configuré avec une vitesse de rotation variable.

6. Centrale turboélectrique selon la revendication 4 ou 5, en outre avec un redresseur pour le redressement de la tension de départ électrique du générateur et un convertisseur qui est couplé d'une part au redresseur et d'autre part à une connexion au réseau, dans laquelle le convertisseur sert à transmettre au réseau une puissance électrique en cas de fréquence nécessaire au réseau.
